Europäisches Patentamt

European Patent Office

Office européen des brevets

(19)

(11) EP 0 825 453 B1

(12) **FASCICULE DE BREVET EUROPEEN**

(45) Date de publication et mention
de la délivrance du brevet:
**01.08.2001 Bulletin 2001/31**

(51) Int Cl.⁷: **G01S 7/52**

(21) Numéro de dépôt: **97401409.4**

(22) Date de dépôt: **19.06.1997**

(54) **Procédé et dispositif pour le traitement de signaux représentatifs d'ondes réfléchies ou transmises par une structure volumique en vue d'effectuer une exploration et une analyse de cette structure**

Verfahren und Anordnung zur Bearbeitung von Signalen, welche durch ein Volumenstruktur reflektierte oder übertragene Wellen darstellen, um eine Forschung und Analyse der Struktur auszuführen

Method and apparatus for processing signals representative of waves which have been reflected by or transmitted through a volume structure, in order to enable exploration and analysis of said structure

(84) Etats contractants désignés:
**AT DE ES GB IT NL SE**

(30) Priorité: **14.08.1996 FR 9610325**

(43) Date de publication de la demande:
**25.02.1998 Bulletin 1998/09**

(73) Titulaire: **Dory, Jacques**
**77580 Villiers sur Morin (FR)**

(72) Inventeur: **Dory, Jacques**
**77580 Villiers sur Morin (FR)**

(74) Mandataire: **de Saint-Palais, Arnaud Marie**
**CABINET MOUTARD**
**35 Rue de la Paroisse**
**BP 513**
**78005 Versailles Cedex (FR)**

(56) Documents cités:
**EP-A- 0 168 565          EP-A- 0 612 502**
**WO-A-91/19457          US-A- 5 347 495**

- **PATENT ABSTRACTS OF JAPAN vol. 016, no. 504 (P-1439), 19 octobre 1992 & JP 04 184185 A (NIPPON TELEGR & TELEPH CORP), 1 juillet 1992,**
- **PATENT ABSTRACTS OF JAPAN vol. 013, no. 165 (P-860), 20 avril 1989 & JP 64 001958 A (MITSUBISHI ELECTRIC CORP), 6 janvier 1989,**
- **PATENT ABSTRACTS OF JAPAN vol. 015, no. 019 (P-1153), 16 janvier 1991 & JP 02 263180 A (TOSHIBA CORP), 25 octobre 1990,**

EP 0 825 453 B1

**Description**

La présente invention concerne un procédé et un dispositif pour le traitement de signaux représentatifs d'ondes réfléchies ou transmises par une structure volumique en vue d'effectuer une exploration et une analyse de cette structure.

Elle s'applique notamment, mais non exclusivement, à la réalisation d'appareillages tels que des échographes, des appareils de contrôle non destructifs d'objets, des sonars, ou même des radars.

Les appareillages classiques de ce genre font habituellement intervenir des moyens d'émission qui émettent une onde incidente dans le milieu à examiner et des moyens de réception utilisant éventuellement tout ou partie des moyens d'émission (systèmes homodynes) qui reçoivent les ondes réfléchies par les structures rencontrées par l'onde incidente. Des moyens sont en outre prévus pour transformer pour traiter les signaux reçus par les moyens de réception et les présenter sous une forme exploitable par l'utilisateur, par exemple sous la forme d'une image permettant de localiser la position des obstacles engendrant des réflexions de l'onde incidente.

La méthode la plus couramment utilisée en vue d'obtenir ces résultats consiste à utiliser des ondes impulsionnaires selon un processus consistant à transmettre une impulsion dans une direction donnée (tir), à détecter le retour des échos, à mesurer le temps écoulé entre l'émission et la réception et à en déduire la distance et donc la position de l'obstacle qui a engendré chaque écho. Ce processus de tir se répète ensuite pour différentes directions, selon une loi de balayage prédéterminée.

Une fois le balayage réalisé, il devient possible de réaliser, par exemple sur un système d'affichage classique, des images mettant en évidence les obstacles détectés par les échos, dont on connaît les positions.

De nombreux appareillages de ce genre exploitent une méthode dite "séquentielle" selon laquelle la structure est examinée ligne par ligne au moyen d'un faisceau mobile, la ligne d'exploration étant déplacée entre chaque tir.

Dans ces conditions, la vitesse d'examen croît avec la section du faisceau explorateur et avec la cadence des impulsions. Or. il s'avère que la section du faisceau est limitée par la résolution spatiale exigée, tandis que la cadence est elle-même limitée par le temps nécessaire à tous les échos réfléchis pour revenir sur la sonde.

A titre d'exemple, pour l'examen d'une plaque d'aluminium, où l'on veut détecter des défauts de 1 mm de diamètre, avec une résolution de 3 mm, la section du faisceau ne peut guère dépasser 2 mm, et la cadence, compte tenu du phénomène de réverbération, doit être inférieure à 1000 Hz.

Dans ces conditions, la vitesse d'examen superficielle ne peut dépasser 2 mm x 2 mm x 1000 = 4000 mm$^2$/seconde soit 4/1000 de m$^2$, soit en une heure 4/1000 x 3600 = 14,4 m$^2$. En sortie de fabrication, cette vitesse s'avère souvent trop faible. car elle freine la production, d'où parfois la nécessité de faire travailler plusieurs installations en parallèle.

Dans de nombreuses autres applications. contrôle de tubes, de rails en voie, etc... cette limitation est encore plus critique.

Dans le but de supprimer ces inconvénients, on a déjà proposé d'émettre sur l'objet à explorer une onde sensiblement plane, de section relativement importante engendrée par une sonde constituée par un réseau comprenant une pluralité d'organes d'émission/réception de faible dimension de préférence inférieure à une longueur d'onde, de façon à posséder un très large diagramme de rayonnement ; ces organes d'émission étant attaqués simultanément, en parallèle. A la réception, chaque organe d'émission/réception travaille de façon indépendante et reçoit donc séparément les ondes réfléchies par les obstacles interceptant le faisceau qui se trouve dans sa zone de réception. Après numérisation, les informations délivrées par ces organes d'émission (champ d'ondes réfléchies) sont mémorisées dans les mémoires dont la lecture s'effectue en sens inverse de l'écriture.

Les signaux de lecture sont alors appliqués à un dispositif de reconstitution du champ d'ondes réfléchies qui comprend une pluralité d'organes émetteurs répartis selon une structure similaire à celle des organes d'émission/réception de la susdite sonde. L'application des signaux de lecture à ces organes émetteurs s'effectue en correspondance avec la transmission à la mémoire des signaux d'écriture par les organes d'émission/réception.

Le dispositif de reconstitution a pour but de reproduire dans un milieu auxiliaire le champ d'onde réfléchie afin de reproduire une image de l'objet. avec une résolution qui dépend de la longueur d'onde de l'onde incidente et de la dimension des éléments de la sonde

Dans le cas où l'onde incidente est une onde ultrasonore, la solution la plus simple consiste à former l'image dans un milieu optiquement transparent et à la visualiser par la méthode de Schlieren.

Toutefois, cette méthode se prête mal à une exploitation industrielle. En outre, elle n'est pas linéaire et ne permet pas de restituer les composantes haute-fréquence.

Selon un autre procédé, l'image est recueillie sur une troisième sonde et la fréquence de lecture est modulée de façon à ce que l'image d'une structure soit toujours "au point" lorsque les signaux correspondants arrivent sur cette sonde.

Il s'avère que ce système est complexe et exige des sondes à très large bande. Par ailleurs, le passage dans trois sondes successives entraîne une dégradation du signal. En outre, des difficultés supplémentaires apparaissent lorsque l'onde d'émission est inclinée ou circulaire.

Par ailleurs, le brevet US-A-4 817 434 décrit un dispositif comprenant un générateur d'adresse par élément récepteur de la sonde, ce générateur fournissant l'adresse à lire dans la mémoire de champ correspondant à l'élément récepteur pour obtenir le signal correspondant au point image à reconstituer. Le point image est obtenu en combinant les signaux lus dans les mémoires de champ respectives des éléments de détection, aux adresses indiquées par le générateur d'adresses, correspondant au point image à reconstituer. Ce dispositif ne permet qu'une cadence de constitution d'image relativement faible. Pour supprimer cet inconvénient, ce document prévoit une chaîne de traitement complète par point image à reconstituer, Il en résulte un dispositif présentant un grand nombre de composants, et donc extrêmement coûteux.

L'invention a donc plus particulièrement pour but de supprimer ces inconvénients.

A cet effet, elle se base sur la constatation que, dans un processus tel que celui précédemment décrit, chaque point de l'objet à explorer donne naissance à une onde réfléchie qui se trouve mémorisée en des positions des mémoires réparties sous la forme d'arcs d'hyperboles dont les caractéristiques dépendent de la distance du point à la sonde et du diagramme de rayonnement de chaque élément (ces hyperboles se réduisent théoriquement aux deux asymptotes pour les points situés contre la sonde).

En conséquence, le procédé selon l'invention comprend les étapes suivantes :

- l'émission dans ladite structure d'une onde incidente,
- la réception des ondes réfléchies ou transmises par les structures rencontrées par l'onde incidente à l'intérieur de l'objet, par une pluralité d'éléments de détection indépendants les uns des autres,
- la mémorisation après numérisation des signaux délivrés par les moyens de détection, dans une mémoire de champ comprenant une ligne respective par élément de détection, et
- la reconstitution et/ou l'analyse de la structure de l'objet à partir des informations lues dans la mémoire de champ, dans laquelle sont calculées pour chaque point de l'objet, les positions de la mémoire de champ contenant les signaux détectés par les éléments de détection, correspondant aux ondes réfléchies ou transmises par ce point, ces positions étant calculées à l'aide d'une loi d'adressage dont les paramètres dépendent de la position de ce point par rapport aux éléments de détection, et dans laquelle pour chaque point, les lignes de la mémoire de champ sont lues aux positions respectives calculées au préalable pour ce point, et stockées dans des mémoires d'adressage respectivement associées auxdites lignes de la mémoire de champs et un calcul est appliqué aux informations lues pour ce point pour obtenir un résultat représentatif de l'importance de l'onde réfléchie ou transmise par ce point, lors de ce calcul, toutes les lignes de la mémoire de champ étant lues en parallèle pour chaque point aux positions indiquées pour ce point respectivement par les mémoires d'adressage associées, le calcul du résultat étant ensuite appliqué à toutes les valeurs lues dans la mémoire de champ, ce résultat étant ensuite traité ou mémorisé dans une mémoire spécifique,

Ce procédé est caractérisé en ce que :

- l'onde incidente comporte au moins une alternance complète,
- la fréquence d'échantillonnage utilisée pour la numérisation des signaux de détection est égale à au moins trois fois la fréquence de l'onde incidente
- lors de la susdite phase de reconstitution, on effectue la lecture dans la mémoire de champs des valeurs correspondant aux alternances positives et négatives,
- on compense les premières valeurs par les secondes valeurs de manière à enregistrer dans la susdite mémoire spécifique une valeur compensée présentant un rapport signal/bruit amélioré.

Compte tenu du fait que le calcul de chaque loi de lecture est trop long pour être effectué en temps réel, ce calcul est donc effectué au préalable et les résultats sont stockés dans des mémoires "adresses" spécifiques, associées à chaque ligne de la mémoire "champ".

Toutes les lignes de la mémoire de champ sont donc relues en parallèle et les valeurs sont additionnées (soit directement sous forme numérique, soit sous forme analogique, après conversion numérique/analogique) pour donner naissance à une tension dont la valeur est introduite dans une mémoire "image" comprenant une pluralité de points, à chacun desquels correspond une loi de lecture par exemple hyperbolique dont les paramètres dépendent des coordonnées de ce point.

Ainsi, le processus de lecture se déroule alors de la façon suivante :

Pour chaque point de la mémoire "image", les coordonnées de ce point sont transmises en parallèle à toutes les mémoires "adresses". Ces dernières fournissent immédiatement, en parallèle, les adresses de chaque ligne de mémoire de "champ" permettant de générer la loi (par exemple l'hyperbole) de lecture correspondante. La tension $V_p$ correspondante est alors mémorisée dans la mémoire "image" à l'adresse dudit point.

Un mode d'exécution de l'invention sera décrit ci-après, à titre d'exemple non limitatif, avec référence aux dessins annexés dans lesquels :

La figure 1 est un schéma théorique d'un dispositif d'exploration et d'analyse d'une structure volumique ;

La figure 2 est une représentation schématique illustrant le principe de fonctionnement du dispositif représenté figure 1.

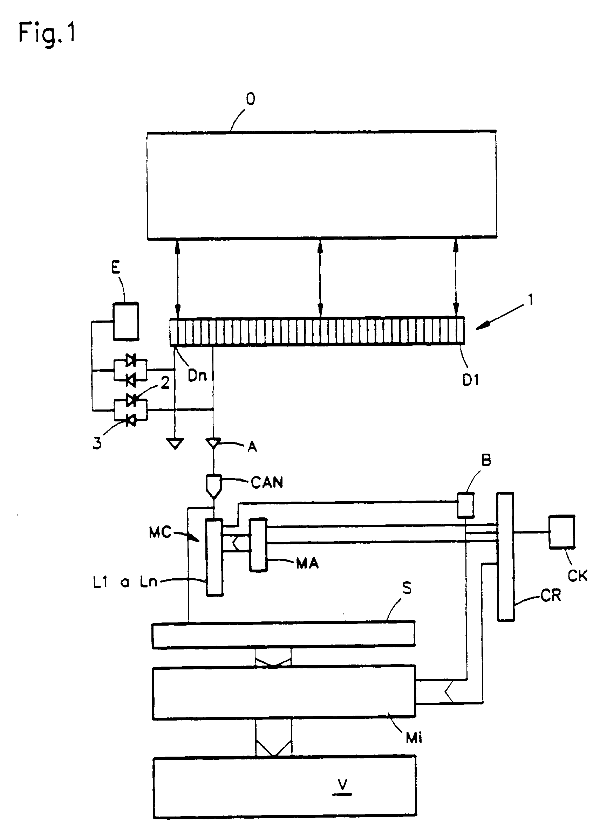

Le dispositif représenté figure 1 est utilisable dans des appareillages à ultrasons travaillant en réflexion d'impulsions, pour le contrôle non destructif des matériaux ou l'imagerie médicale.

Il fait intenvenir une sonde 1 constituée par une barrette linéaire composée d'une pluralité d'éléments émetteurs/récepteurs $D_1$ à $D_n$ de faible dimension (1 mm) par exemple au nombre de 128. De ce fait, la même sonde 1 est utilisée à l'émission et à la réception.

Chaque élément $D_1$ à $D_n$ est relié, d'une part, à une zone, ici une ligne $L_1 \ldots L_n$ respective d'une mémoire de champ MC, par l'intermédiaire d'un préamplificateur A et d'un convertisseur analogique/numérique CAN et, d'autre part, à un émetteur E, par l'intermédiaire de deux diodes 2, 3 montées tête-bêche, présentant un seuil de conduction par exemple de l'ordre d'une fraction de volt.

Ainsi, lorsque l'émetteur E émet en délivrant une tension pouvant atteindre une centaine de volts alternatifs, les diodes 2, 3 associées à tous les éléments émetteurs/récepteurs $D_1$ à $D_9$ sont largement conductrices et se comportent comme des courts-circuits, de sorte que tous les éléments $D_1$ à $D_9$ sont excités en parallèle par l'émetteur E et produisent donc une onde plane.

Par contre, à la réception, chaque élément $D_1$ à $D_9$ travaille de façon indépendante et attaque le préamplificateur A auquel il se trouve relié. En effet, les signaux détectés par les éléments sont faibles (quelques dizaines de millivolts).

Cette disposition a en outre l'avantage de diminuer le bruit d'entrée en isolant les préamplificateurs A du circuit d'émission

Chaque préamplificateur A attaque ensuite un convertisseur analogique/ numérique CAN correspondant et les signaux numérisés sont stockés dans les lignes de mémoires $L_1$ à $L_n$, à des adresses d'écritures fournies par une mémoire d'adressage MA elle-même adressée par un compteur CR piloté par une horloge CK. Ce compteur CR et cette horloge CK sont communs à toutes les mémoires d'adressage MA associées aux lignes de mémoires $L_1$ à $L_n$.

Lors de l'écriture des lignes de mémoires $L_1$ à $L_n$, les sorties des mémoires d'adressage correspondent à la valeur du compteur CR. Tout se passe donc comme si les lignes de mémoires de champ $L_1$ à $L_n$ étaient adressées en parallèle par le compteur CR.

Avantageusement, le nombre No de positions mémoires utilisées lors de l'opération d'écriture est choisi parmi les puissances de deux soit, par exemple, 512, 1024, etc..

Si, par exemple, No est égal à 512, les positions 0 à 511 de la mémoire de champ sont écrites.

Aussitôt après l'écriture, les mémoires $L_1$ à $L_n$ sont commutées en position lecture, par l'intermédiaire d'une bascule B commandée par le bit 10 du compteur CR.

A partir de l'adresse 512, les sorties des lignes de mémoires de champ $L_1$ à $L_n$ ne sont plus identiques, mais sont calculées de façon que les positions de mémoire adressées correspondent à une forme prédéterminée (hyperbole de lecture).

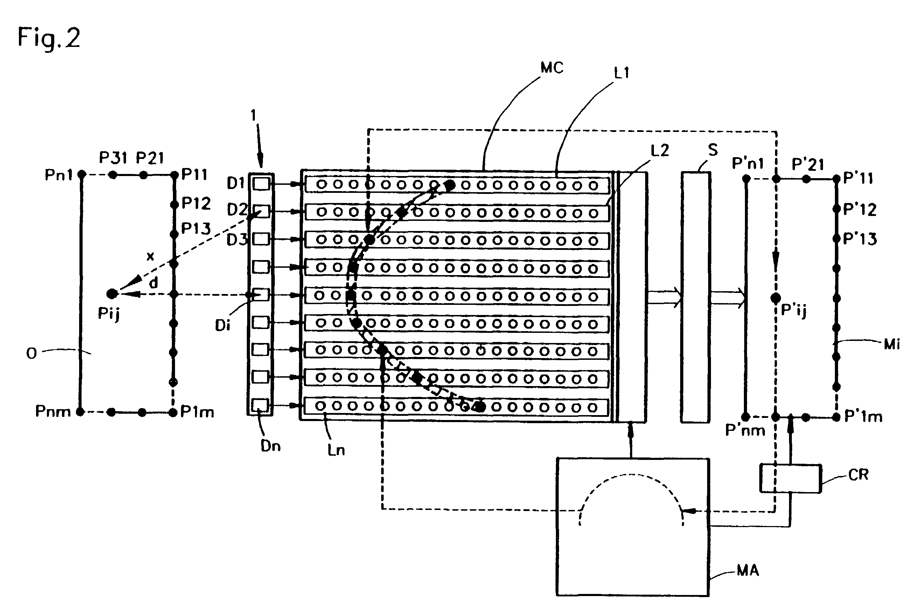

Ce calcul est effectué de la façon suivante à partir de l'adresse 512, le compteur CR adresse une position P'ij d'une mémoire Mi (figure 2). A chaque point $P'_{11}$ à P'nm de cette mémoire Mi on fait correspondre une position $P_{11}$ à $P_{nm}$ de l'objet examiné O, de manière à ce que cette mémoire "image" Mi puisse être exploitée par la suite pour fournir une image de l'objet O.

Pour chacun de ces points, $P'_{11}$, $P'_{nm}$, on calcule les positions occupées dans les lignes de mémoires de champ $L_1$ à $L_n$ par l'impulsion ultrasonore réfléchie, en tenant compte de la forme du champ émis, de la fréquence de numérisation, de la vitesse du son, de la position de l'objet par rapport à la sonde. Ainsi, pour le point Pij de l'objet qui correspond au point P'ij de la mémoire "image" Mi, les positions occupées dans la mémoire de champ MC sont disposées selon une hyperbole indiquée par les hachures.

Si la sonde 1 est en contact direct avec l'objet, la numérisation peut commencer en même temps que l'émission. Si l'on travaille avec un relais acoustique, le début de la numérisation peut être différé d'un temps égal au parcours aller-retour dans le relais.

Les valeurs lues dans les différentes mémoires (par exemple les valeurs contenues dans les cellules des lignes de mémoires situées sur l'hyperbole H relative au point Pij) sont additionnées dans un circuit additionneur S et envoyées à la position sélectionnée de la mémoire Mi (par exemple la position P'ij).

Comme précédemment mentionné, les informations contenues dans la mémoire Mi peuvent être exploitées de différentes manières.

Elles peuvent servir à former une image sur un écran de visualisation V de type classique.

Ces informations peuvent être également traitées, par exemple, par des circuits logiques permettant d'identifier et d'enregistrer la nature des défauts détectés dans le cas d'un contrôle non destructif

Les mémoires d'adressage MA peuvent être des mémoires mortes (ROM, PROM, EPROM) programmées une fois pour toutes. Toutefois, il est préférable. tant en ce qui concerne la vitesse que la souplesse d'exploitation. d'utiliser des mémoires reprogrammables une fois en place, par exemple des RAM.

La programmation peut se faire alors au moment de la mise en route. Le calcul préalable peut être effectué par un mini-ordinateur en fonction des conditions d'examen et du modèle de sonde utilisé. Les données peuvent aussi être précalculées et stockées sur disques ou sur PROM. Les résultats sont ensuite transférés séquentiellement dans la mémoire MA par un procédé classique. Ce transfert peut être très rapide (quelques secondes).

Un mode de calcul des adresses dans les mémoires d'adressage MA sera décrit ci-après en regard de la figure 2.

Soit le point Pij situé à une distance d de la sonde à l'aplomb de l'élément de détection Di, on fait correspondre à ce point Pij une position P'ij de la mémoire "image" Mi, donc une adresse fournie par le compteur CR.

Soit x la distance séparant l'élément $D_1$ de la sonde 1 et l'élément Di à l'aplomb du point Pij, et c la vitesse du son dans le milieu objet.

Si l'on suppose que l'onde émise par la sonde 1 est plane et se propage perpendiculairement à la surface de la sonde 1, le temps t(x) mis par une impulsion pour parvenir à un organe de détection par exemple $D_3$ après réflexion sur le point Pij est égal à d/c (temps mis par l'onde émise pour atteindre Pij) + racine carrée de $(x^2 + d^2)/c$ :

$$t(x) = \frac{d + \sqrt{x^2 + d^2}}{c}$$

Si la fréquence d'écriture est désignée par f et si l'écriture démarre en même temps que l'émission, le signal réfléchi va être stocké dans la cellule de la mémoire de champ MC située à l'abscisse x, à la position f. t(x).

C'est la valeur f. t(x) qui va être introduite dans la mémoire MA pour être utilisée lors de l'opération de lecture.

Si l'onde ne se propage pas perpendiculairement à la sonde (sondage sous incidence inclinée) ou si l'onde n'est pas plane (onde circulaire dans le cas d'un sondage sectoriel) le calcul se fait de façon très similaire, seul change le temps mis par l'onde pour atteindre un point Pij. Ce temps ne dépend plus seulement de d mais aussi de la position latérale du point Pij par rapport à la sonde 1. Si l'onde est inclinée, le temps varie linéairement en fonction de la position latérale Xp, le temps mis par l'onde émise pour atteindre le point Pij étant égal à (d . cos (θ) - Xp . sin θ)/C, θ étant l'angle du faisceau émis par rapport à la normale à la sonde 1.

Dans le cas où les ondes engendrées par la sonde 1 sont entretenues ou semi-entretenues et où ces ondes ont la forme d'un train d'ondes d'une durée suffisante pour couvrir tout l'objet, chaque point donne naissance à une onde réfléchie de durée telle qu'elle va être mémorisée dans presque toutes les positions des lignes de mémoires MC. et les informations correspondant à des points différents vont se superposer.

On peut considérer alors qu'une "tranche" de ces mémoires contiendra toutes les informations correspondant à l'objet, à partir du moment où cette tranche aura une "épaisseur" suffisante pour contenir la plus grande des hyperboles.

La lecture de cette unique tranche sera donc en principe suffisante pour recréer l'image de l'objet.

Cette lecture pourra se faire en modifiant progressivement la forme des hyperboles de lecture, ou en "mettant au point" sur une zone située à une distance donnée.

La numérisation du signal devra alors se faire sur un nombre de niveaux plus élevés, pour permettre une bonne discrimination des différentes informations.

On peut aussi envisager, pour simplifier l'électronique, d'adresser séquentiellement les mémoires MC lors de l'écriture, la relecture se faisant toujours en parallèle (un seul préamplificateur et un seul convertisseur analogique/numérique sont alors nécessaires).

La vitesse d'acquisition est alors notablement diminuée, mais la résolution reste élevée. Cette solution peut être intéressante lorsque la recherche de la vitesse n'est pas une priorité. Des solutions mixtes peuvent aussi être envisagées : écriture parallèle sur des groupes de mémoires, ces groupes étant adressés séquentiellement.

Dans l'exemple précédemment décrit, le signal ultrasonore est mémorisé avant détection, donc au niveau haute fréquence. La fréquence d'échantillonnage doit être au moins égale à trois fois la fréquence ultrasonore soit, par exemple, de 10 MHz pour une onde ultrasonore de 3 MHz.

Ainsi. dans le cas où l'on désire sonder une profondeur de 10 cm dans l'acier, le temps de parcours aller-retour maximum est égal à environ 60 microsecondes, soit 600 points échantillonnés sur chaque ligne.

Pour une image de 100 lignes, il faudra donc calculer 600 x 100 = 60.000 points.

Le calcul se réduit ici à une simple lecture de mémoire suivi d'une addition.

Cette opération peut être réalisée, avec des circuits modernes, en 1/100 de microseconde. La totalité de l'image sera donc calculée en 60.000/100 = 600 microsecondes.

La mémorisation du champ aura duré 60 microsecondes, et le temps total d'acquisition d'une image sera donc égal à 660 microsecondes, la cadence image pourra être supérieure à 1000 Hz.

Si cette cadence s'avère insuffisante, elle peut être augmentée de plusieurs manières :

a) Partage de la mémoire champ en plusieurs sous/mémoires lues en parallèles.

b) Sélection et traitement de la seule zone mémoire contenant les informations utiles.

Il est à noter que l'onde ultrasonore a souvent la forme d'une impulsion brève comprenant plusieurs alternances. Il peut alors être intéressant d'utiliser plusieurs hyperboles de lecture interceptant ces alternances. Si l'impulsion est courte et ne comporte qu'une alternance complète, une hyperbole pourra être utilisée pour relire l'alternance positive et à une distance correspondant à une demi période pour relire la négative. Si Pp et Pm sont les valeurs obtenues après ces relectures, la valeur P = Pp - Pm sera enregistrée. Cette solution peut améliorer le rapport signal/bruit et la résolution du système. Les deux lectures peuvent se faire successivement, au détriment de la vitesse, ou en parallèle, en utilisant deux groupes de mémoires

Le procédé selon l'invention présente de nombreux avantages vis-à-vis des procédés séquentiels.

Vitesse : Une surface importante est explorée à chaque tir, par exemple 100 x 5 mm, au lieu de 3 x 3 mm dans le procédé séquentiel.

La vitesse d'examen peut être multipliée par 50 ou 100 par rapport au procédé séquentiel, ce qui est considérable.

La rapidité du système ouvre la voie à de nombreuses applications, par exemple l'imagerie tridimensionnelle et l'imagerie Doppler.

L'imagerie tridimensionnelle peut s'obtenir aisément si l'on utilise une sonde matricielle, mais l'électronique est très lourde, car le nombre d'éléments d'une sonde matricielle classique est élevé. Cependant, il est possible de réduire sensiblement le nombre d'éléments en utilisant une répartition aléatoire de ces derniers sur la surface de la sonde, ce qui autorise un espacement plus grand des éléments sans que les lobes parasites deviennent trop importants. Avec une sonde linéaire, une série de plans peut être rapidement enregistrée en déplaçant le plan de coupe entre chaque tir. A une cadence de 100 Hz. 100 plans de coupe peuvent être mémorisés en 1/10 seconde. Les mémoires peuvent être ensuite exploitées pour obtenir une vue tridimensionnelle, ou une vue en coupe dans un plan quelconque.

En ce qui concerne l'imagerie Doppler, l'application à l'imagerie Doppler résulte du fait que des images successives peuvent être comparées. Le signal haute fréquence étant mémorisé, des différences très faibles entre deux images peuvent être décelées (par soustraction, par exemple) et mises en évidence.

résolution : Le système travaille avec une très grande ouverture numérique. Pratiquement, la résolution spatiale n'est limitée que par la plus grande des deux valeurs : longueur d'onde - dimension d'un élément. Ainsi, dans l'exemple cité, la plus grande de ces deux valeurs est la longueur d'onde, soit 2 mm. Avec une fréquence de 10 MHz, la plus grande des deux valeurs serait la dimension d'un élément, soit ici 1 mm.

Reproductibilité : La sensibilité du système varie très peu en fonction de la position d'un obstacle sous la sonde, puis le champ est émis sous forme d'une onde plane. De plus, les variations de sensibilité en fonction de la position peuvent être calculées, et donc corrigées, puisque l'on connaît la position exacte de chaque obstacle par rapport à la sonde.

Le système peut fonctionner avec des fronts d'ondes d'émission de forme quelconque (plans, plans inclinés, cylindriques). Il suffit de calculer dans chaque cas la forme des hyperboles de lecture en fonction de leur position.

## Revendications

**1.** Procédé pour le traitement de signaux représentatifs d'ondes réfléchies ou transmises par un objet (O), en vue d'effectuer une exploration et une analyse de la structure de cet objet, ce procédé comprenant les étapes suivantes :

- l'émission dans ladite structure d'une onde incidente,
- la réception des ondes réfléchies ou transmises par les structures rencontrées par l'onde incidente à l'intérieur de l'objet (O), par une pluralité d'éléments de détection ($D_1$ à $D_n$) indépendants les uns des autres,
- la mémorisation après numérisation des signaux délivrés par les moyens de détection, dans une mémoire de champ (MC) comprenant une ligne ($L_1$ à $L_n$) respective par élément de détection ($D_1$ à $D_n$), et
- la reconstitution et/ou l'analyse de la structure de l'objet (O) à partir des informations lues dans la mémoire de champ (MC), dans laquelle sont calculées pour chaque point (Pij) de l'objet (O), les positions de la mémoire de champ contenant les signaux détectés par les éléments de détection ($D_1$ à $D_n$), correspondant aux ondes réfléchies ou transmises par ce point (Pij), ces positions étant calculées à l'aide d'une loi d'adressage dont les paramètres dépendent de la position de ce point par rapport aux éléments de détection, et dans laquelle pour chaque point (Pij), les lignes ($L_1$ à $L_n$) de la mémoire de champ (MC) sont lues aux positions respectives calculées au préalable pour ce point (Pij), et stockées dans des mémoires d'adressage (MA) respectivement associées auxdites lignes ($L_1$ à $L_n$) de la mémoire de champs (MC) et un calcul est appliqué aux informations lues pour ce point pour obtenir un résultat ($V_p$) représentatif de l'importance de l'onde réfléchie ou transmise par ce point, lors de ce calcul, toutes les lignes ($L_1$ à $L_n$) de la mémoire de champ (MC) étant lues en parallèle pour chaque point (Pij) aux positions indiquées pour ce point respectivement par les mémoires d'adressage (MA) associées, le calcul du résultat ($V_p$) étant ensuite appliqué à toutes les valeurs lues dans la mémoire de champ (MC), ce résultat étant ensuite traité ou mémorisé dans une mémoire spécifique,

caractérisé en ce que :

- l'onde incidente comporte au moins une alternance complète,
- la fréquence d'échantillonnage utilisée pour la numérisation des signaux de détection est égale à au moins trois fois la fréquence de l'onde incidente
- lors de la susdite phase de reconstitution, on effectue la lecture dans la mémoire de champs des valeurs correspondant aux alternances positives et négatives,
- on compense les premières valeurs par les secondes valeurs de manière à enregistrer dans la susdite mémoire spécifique une valeur compensée présentant un rapport signal/bruit amélioré.

2. Procédé selon la revendication 1,
le résultat (Vp) pour chaque point (Pij) est mémorisé dans une mémoire image (Mi) comprenant une pluralité de positions ($P_1'$ à $P_n'$) correspondant respectivement aux points (Pij).

3. Procédé selon la revendication 1 ou 2,
caractérisé en ce que la susdite loi d'adressage est une loi hyperbolique, et le calcul appliqué aux valeurs lues dans la mémoire champ (MC) est une addition.

4. Procédé selon l'une des revendications précédentes,
caractérisé en ce que plusieurs lois d'adressage de lecture sont associées à chaque point ($P_1$ à $P_n$) de la mémoire image.

5. Procédé selon l'une des revendications précédentes,
caractérisé en ce que les susdites ondes incidentes sont émises sous la forme d'impulsions.

6. Procédé selon l'une des revendications 1 à 3,
caractérisé en ce que les ondes incidentes sont émises sous la forme de trains d'ondes ou d'une émission continue, la loi d'adressage étant alors choisie de façon à mettre en évidence les points réfléchissants situés à une distance prédéterminée.

7. Procédé selon l'une des revendications précédentes,
caractérisé en ce que l'émission des ondes incidentes et la réception des ondes réfléchies s'effectuent par les mêmes moyens.

8. Procédé selon l'une des revendications 1 à 6,
caractérisé en ce que l'émission des ondes incidentes et la réception des ondes réfléchies ou transmises s'effectuent à l'aide de moyens distincts.

9. Procédé selon l'une des revendications précédentes,
caractérisé en ce que les fronts des ondes incidentes sont plans.

10. Procédé selon la revendication 1,
caractérisé en ce que les ondes incidentes sont composées de faisceaux directifs et/ou focalisés, ne se recouvrant pas, ces faisceaux étant déplacés au cours d'émissions successives de façon à couvrir toute la structure explorée.

11. Procédé selon la revendication 1,
caractérisé en ce que les susdites ondes incidentes sont engendrées à l'aide d'un réseau linéaire d'organes d'émission / réception indépendants.

12. Procédé selon la revendication 1,
caractérisé en ce que les ondes incidentes sont engendrées à l'aide d'organes d'émission / réception disposés selon une configuration matricielle.

13. Procédé selon la revendication 1,
caractérisé en ce que les ondes incidentes sont engendrées à l'aide d'organes d'émission / réception disposés aléatoirement.

14. Dispositif pour la mise en oeuvre du procédé selon la revendication 1,
caractérisé en ce qu'il comprend une sonde (1) composée d'une pluralité d'éléments émetteur / récepteur ($D_1$ à $D_n$) reliés chacun, d'une part, à un émetteur (E), par l'intermédiaire de deux diodes à seuil de conduction (2, 3) montées tête-bêche et, d'autre part, à un convertisseur analogique I numérique (CAN) dont la sortie est reliée à l'entrée d'écriture d'une ligne respective ($L_1$ à $L_n$) d'une mémoire de champ (MC), dont la lecture est commandée par une mémoire d'adressage (MA) respective pilotée par une horloge (CK) via un compteur (CR), les sorties de lecture respectives des lignes ($L_1$ à $L_n$) de la mémoire de champ (MC) étant connectées à un additionneur (S) dont la sortie est reliée à l'entrée d'écriture d'une mémoire image (Mi) pilotée par le susdit compteur (CR).

15. Dispositif selon la revendication 14,
caractérisé en ce que la susdite mémoire image (Mi) est exploitée par un dispositif d'affichage.

**Claims**

1. A method for the processing of signals representative of reflected transmitted waves by an environment (O), with a view to exploring and analyzing the structure of said environment (O), said method comprising the following steps :

- the emission of one incident wave in said structure,
- the reception of the reflected or transmitted waves by the structure encountered by the incident wave inside the environment (O), by a plurality of detection elements ($D_1$ to $D_n$) independent of one another,
- the storage after digitalization of the signals supplied by the detection elements, in a field memory (MC) comprising a respective line ($L_1$ to $L_n$) by detection element ($D_1$ to $D_n$), and
- the reconstitution and/or analysis of the structure of the environment (O) from the read information in the field memory (MC), in which are computed for each point (Pij) of the environment (O), the positions of the field memory containing the detected signals by the detection elements ($D_1$ to $D_n$) corresponding to the reflected or transmitted waves by this point (Pij), said positions being computed by the way of an addressing law, the parameters of which depend on the position of this point with regard to the detection means, and in which for each point (Pij), the lines ($L_1$ to $L_n$) of the field memory (MC) are read to the respective positions computed preliminary for this point (Pij), and stored in addressing memories (MA) respectively associated to said lines ($L_1$ to $L_n$) of the field memory, and a computation is applied to the read values for this point to obtain a result ($V_p$) representative of the importance of the reflected or transmitted wave originating from this point, during said computation, all the lines ($L_1$ to $L_n$) of the memory field (MC) being read in parallel for each point (Pij) to the indicated positions for this point respectively by the associated addressing memories (MA), the computing of the result ($V_p$) being then applied to all the read values in the field memory (MC), said result being then processed or memorized in a specific memory,

characterised in that

- the incident wave comprises at least one complete alternance,
- the sampling frequency used for the digitalization of the detection signals is equal to at least three times the frequency of the incident wave,
- during said reconstitution phase, the reading in the field memory of the values corresponding to the positive and negative alternances is executed,
- the first values are compasated by the second values in order to record in said specific memory a compasated value presenting an improved ratio signal/sound.

2. Method according to claim 1,
the result ($V_p$) for each point (Pij) is memorized in an image memory (Mi) comprising a plurality of positions ($P_1$ to $P_{n'}$) corresponding respectively to the points (Pij).

3. The method according claim 1 or 2,
characterised in that said addressing law is a hyperbolic law, and the computation applied to the values read in the field memory (MC) is an addition.

4. The method according one of the preceding claims,
characterised in that plural read addressing laws are associated with each point ($P_1$ to $P_n$) of the image memory.

5. The method according one of the preceding claims,
characterised in that said incident waves are transmitted in the form of pulses.

6. The method according one of the claims 1 to 3,
characterised in that the incident waves are transmitted in the form of wave trains or of a continuous transmission, the hyperbolic law then being chosen so as to highlight the reflecting points situated at a predetermined distance.

7. The method according one of the preceding claims,
characterised in that the transmission of the incident waves and reception of the waves reflected are performed by the same means.

8. The method according one of the claims 1 to 6,
characterised in that the transmission of the incident waves and reception of the waves reflected or transmitted are performed by separate means.

9. The method according one of the preceding claims,
characterised in that the incident wave fronts are plane.

10. The method according claim 1,
characterised in that the incident waves are comprised of directive and/or focalized beams that do not overlap, these beams being displaced in the course of successive transmissions in order to cover the entire structure explored.

11. The method according claim 1,
characterised in that said incident waves are generated by means of a linear network of independent transmission/reception devices.

12. The method according claim 1,
characterised in that the incident waves are generated by means of transmission/reception devices arranged according to a matrix configuration.

**13.** The method according claim 1,
characterised in that the incident waves are generated by means of transmission/reception devices arranged randomly.

**14.** A device for implementing the method according claim 1,
characterised in that it comprises a probe (1) comprised of a plurality of transmitter/receiver elements ($D_1$ to $D_n$) each connected, on the one hand, to a transmitter (E), via two conduction threshold diodes (2, 3) mounted head-to-foot, and, on the other hand, to an analog-to-digital converter (CAN), of which the output is connected to the write input of a respective line ($L_1$ to $L_n$) of a field memory (MC), of which the reading is controlled by an addressing memory (MA) driven by a clock (CK) via a counter (CR), the read output of the lines ($L_1$ to $L_n$) of the field memories (MC) being connected to an adder (S) of which the output is connected to the write input of an image memory (Mi) driven by said counter (CR).

**15.** The device according claim 14,
characterised in that said image memory (Mi) is operated by a display device.

**Patentansprüche**

**1.** Verfahren für die Verarbeitung von Signalen, die reflektierten Wellen entsprechen, die von einem Milieu (0) übertragen oder gebrochen werden, um eine Erkundung und Analyse der Struktur dieses Milieus vorzunehmen, wobei dieses Verfahren die folgenden Phasen beinhaltet:

- Absendung von mindestens einer einfallenden Welle in die genannte Struktur,
- Empfang der Wellen, die von den Strukturen reflektiert oder übermittelt werden, wie sie von der einfallenden Welle im Inneren des Milieus (O) angetroffen worden ist, anhand einer Vielzahl von Sensorelementen ($D_1$ bis $D_n$), die voneinander unabhängig sind,
- Digitalisierung und Speicherung der Informationen, die von den Sensorelementen abgegeben werden, in einem Feldspeicher (MC), der eine Zeile ($L_1$ bis $L_n$) je Sensorelement ($D_1$ bis $D_n$) beinhaltet, und
- Rekonstruktion und/oder Analyse der Struktur des Milieus (0) anhand der Informationen, die im Feldspeicher (MC) gelesen worden sind, in dem für jeden Punkt (Pij) des Objekts (0) die Positionen des Feldspeichers berechnet werden, die die Signale enthalten, die von den Sensorelementen ($D_1$ bis $D_n$) geortet worden sind, die den Wellen entsprechen, die von diesem Punkt (Pij) reflektiert oder übertragen worden sind, wobei diese Positionen mithilfe eines Adressierungsgesetzes berechnet werden, dessen Parameter von der Position dieses Punktes im Verhältnis zu den Sonsorelementen abhängen, und in dem für jeden Punkt (Pij) die Zeilen ($L_1$ bis $L_n$) des Feldspeichers (MC) an den jeweiligen Positionen gelesen werden, die vorab für diesen Punkt (Pij) berechnet und in den Adressierungsspeichern (MA) gespeichert worden sind, die den genannten Zeilen ($L_1$ bis $L_n$) des Feldspeichers (MC) zugeordnet sind, wobei auf die für diesen Punkt gelesenen Werte eine mathematische Operation angewendet wird, um ein Ergebnis ($V_p$) zu erhalten, das für den Umfang der Welle repräsentativ ist, die von diesem Punkt reflektiert oder übertragen worden ist, wobei anlässlich dieser Berechnung alle Zeilen ($L_1$ bis $L_n$) des Feldspeichers (MC) parallel für jeden Punkt (Pij) an den Punkten gelesen werden, die für diesen Punkt jeweils von den zugeordneten Adressierungsspeichern (MA) angegeben werden, wobei das Ergebnis der Berechnung ($V_P$) sodann auf alle Werte angewendet wird, die im Feldspeicher (MC) gelesen worden sind, mit anschließender Verarbeitung oder Speicherung dieses Ergebnisses in einem speziellen Speicher,

dadurch gekennzeichnet, daß

- die einfallende Welle mindestens eine vollständige Halbwelle beinhaltet,
- die Sampling rate, die für die Digitalisierung der Ortungssignale verwendet wird, mindestens dem Dreifachen der Frequenz der einfallenden Welle entspricht,
- anlässlich der oben genannten Rekonstruktionsphase erfolgt das Lesen der Werte, die den positiven und negativen Halbwellen entsprechen, im Feldspeicher,
- die ersten Werte werden in der Weise durch die zweiten Werte kompensiert, daß in dem oben genannten spezifischen Speicher ein kompensierter Wert gespeichert wird, der einen verbesserten Rauschabstand aufweist.

**2.** Verfahren gemäß Patentanspruch 1,
dadurch gekennzeichnet, daß das Ergebnis ($V_p$) für jeden Punkt (Pij) in einem Bildspeicher (Mi) gespeichert werden, der eine Vielzahl von Punkten ($P_1'$ bis $P_n'$) enthält, die jeweils den Punkten (Pij) entsprechen.

**3.** Verfahren gemäß Patentanspruch 1 oder 2,
dadurch gekennzeichnet, daß das oben genannte Adressierungsgesetz ein hyperbolisches Gesetz ist und die Berechnung, die auf die Werte angewendet wird, die im Feldspeicher (MC) gelesen worden sind, eine Addition ist.

**4.** Verfahren gemäß einem der voranstehenden Patentansprüche,
dadurch gekennzeichnet, daß mehrere Adressierungsgesetze für das Lesen jedem Punkt ($P_1$ bis $P_n$) des Bildspeichers zugeordnet sind.

**5.** Verfahren gemäß einem der voranstehenden Patentansprüche,
dadurch gekennzeichnet, daß die oben genannten einfallenden Wellen in Form von Impulsen ausgesendet werden.

**6.** Verfahren gemäß einem der Patentansprüche 1 bis 3,
dadurch gekennzeichnet, daß die einfallenden Wellen in Form von Wellenzügen oder einer dauernden Sendung ausgesendet werden, wobei das Adressierungsgesetz in der Weise gewählt wird, daß die reflektierenden Punkte aufgezeigt werden, die sich in einem vorgegebenen Abstand von den Sensorelementen befinden.

**7.** Verfahren gemäß einem der voranstehenden Patentansprüche,
dadurch gekennzeichnet, daß die Sendung der einfallenden Wellen und der Empfang der reflektierten Wellen anhand derselben Mittel erfolgt.

**8.** Verfahren gemäß einem der Patentansprüche 1 bis 6,
dadurch gekennzeichnet, daß das Senden der einfallenden Wellen und der Empfang der reflektierten Wellen mithilfe von verschiedenen Mitteln erfolgt.

**9.** Verfahren gemäß einem der voranstehenden Patentansprüche,
dadurch gekennzeichnet, daß die Fronten der einfallenden Wellen plan sind.

**10.** Verfahren gemäß Patentanspruch 1,
dadurch gekennzeichnet, daß die einfallenden Wellen aus gerichteten und/oder fokalisierten Bündeln bestehen, die sich nicht gegenseitig überlagern, wobei diese Wellenbündel im Laufe aufeinanderfolgender Sendungen so verschoben werden, daß die gesamte erkundete Struktur abgedeckt wird.

**11.** Verfahren gemäß Patentanspruch 1,
dadurch gekennzeichnet, daß die oben genannten einfallenden Wellen mithilfe eines linearen Netzes von unabhängigen Sende- und Empfangsorganen erzeugt werden.

**12.** Verfahren gemäß Patentanspruch 1,
dadurch gekennzeichnet, daß die einfallenden Wellen mithilfe von Sende- und Empfangsorganen erzeugt werden, die anhand einer Matrixkonfiguration angeordnet sind.

**13.** Verfahren gemäß Patentanspruch 1,
dadurch gekennzeichnet, daß die einfallenden Wellen mithilfe von zufällig angeordneten Sende- und Empfangsorganen erzeugt werden.

**14.** Vorrichtung für die Anwendung des Verfahrens gemäß Patentanspruch 1,
dadurch gekennzeichnet, daß sie eine Sonde (1) beinhaltet, die aus einer Vielzahl von Sende/Empfangselementen ($D_1$ bis $D_n$) besteht, die jeweils zum einen über zwei über Kopf montierten Dioden mit Leitungsschwelle (2,3) an einen Sender (E) und zum anderen an einem Analog-/Digitalwandler (CAN) angeschlossen sind, dessen Ausgang an den Schreibeingang einer jeweiligen Leitung ($L_1$ bis $L_n$) eines Feldspeichers (MC) angeschlossen ist, dessen Lesen durch einen Adressierungsspeicher (MA) gesteuert wird, der durch einen Taktgeber (CK) über einen Zähler (CR) geregelt wird, wobei die jeweiligen Leseausgänge der Leitungen ($L_1$ bis $L_n$) des Feldspeichers (MC) an ein Addierglied (S) angeschlossen ist, dessen Ausgang an den Schreibeingang eines Bildspeichers (Mi) angeschlossen ist, der vom oben genannten Zähler (CR) gesteuert wird.

**15.** Vorrichtung gemäß Patentanspruch 14,
dadurch gekennzeichnet, daß der oben genannte Bildspeicher (Mi) über eine Anzeigevorrichtung ausgewertet wird.

Fig.1

# Fig.2

EP 0 825 453 B1